# EUROPEAN PATENT SPECIFICATION

(11) **EP 2 473 389 B1**
(45) Date of publication and mention of the grant of the patent: **25.04.2018**
(21) Application number: 10760764.0
(22) Date of filing: 06.09.2010
(51) Int. Cl.: B60W 30/18, B60W 10/10, B60W 10/18, B60T 8/32

(54) **TRACTORS**
TRAKTOREN
TRACTEURS

(30) Priority: 04.09.2009 GB 0915402
(43) Date of publication of application: 11.07.2012
(73) Proprietor: AGCO GmbH, 87616 Marktoberdorf (DE)
(72) Inventor: BRENNINGER, Martin, Marktoberdorf 87616 (DE); KREIL, Oliver, 87662-Kaltental (DE); ZEILER, Hans-Peter, 87616-Marktoberdorf (DE); HÖLDRICH, Bernhard, 86980 Ingenried (DE); AMMANN, Josef, 87675 Stötten (DE); DITTRICH, Thomas, 87671 Ronsberg (DE)
(86) International application number: PCT/IB2010/002205
(87) International publication number: WO 2011/027212

(56) References cited:
- EP-A2- 1 800 980
- EP-A2- 1 990 230
- DE-A1-102005 060 340
- JP-A- 4 365 645

## Description

This invention relates to tractors and in particular with tractors having continuously variable transmissions (CVTs) that is transmissions in which the operative ratio of the transmission can be varied continuously.

European patent application EP1800980A describes a vehicle having an engine which drives wheels of the vehicle via a CVT, a driver operated braking system which brakes wheels of the vehicle, and an electronic control system which, in the event of deceleration of the vehicle, detects when the driven wheels are about to lock and increases the currently operative CVT ratio to allow the locking wheels to speed up towards a rotational speed corresponding with the current vehicle speed whilst ensuring that any braking operation selected by the driver is maintained subject to the avoidance of wheel locking.

Problems arise with tractors having CVTs when the tractor decelerates either due to a throttle pedal being released, a hand control lever being moved to decelerate the vehicle, the gear ratio being changed by the driver or the brake pedal being applied.

During such deceleration the ratio of the CVT is automatically reduced by a CVT control system to provide engine braking and this can lead to the speed of the driven wheels reducing considerably and, particularly when the vehicle is travelling over low friction surfaces, approaching a situation where the driven wheels are locked or about to lock even if the brakes are not applied. This is a very unstable situation and is best avoided.

Also if the brakes have been applied and are released it may not be possible for the now unbraked wheels to speed up due to the low currently operative CVT ratio.

It is an object of the present invention to provide a vehicle with a CVT which at least mitigates the above problems.

A vehicle according to the present invention is characterised in that characterised in that the CVT is of the hydrostatic/mechanical power split type, and the hydrostatic portion on the CVT has a single hydraulic pump which drives two hydraulic motors one motor driving front wheels of the vehicle and the other motor driving rear wheels of the vehicle so that wheel locking of the front and rear wheels can be controlled separately.

Such a vehicle avoids wheel locking during deceleration whether the brakes are applied or released.

The electronic control system may, for example, measure the vehicle speed and the speed of rotation of the driven wheels and then calculate if the speed of rotation of the wheels is lower than that required to give the vehicle speed, thus indicating an imminent locking of the wheels.

Conveniently the braking system includes an anti-lock braking system (ABS) function which can provide the wheel speed and vehicle speed values and prevent wheel locking under braking.

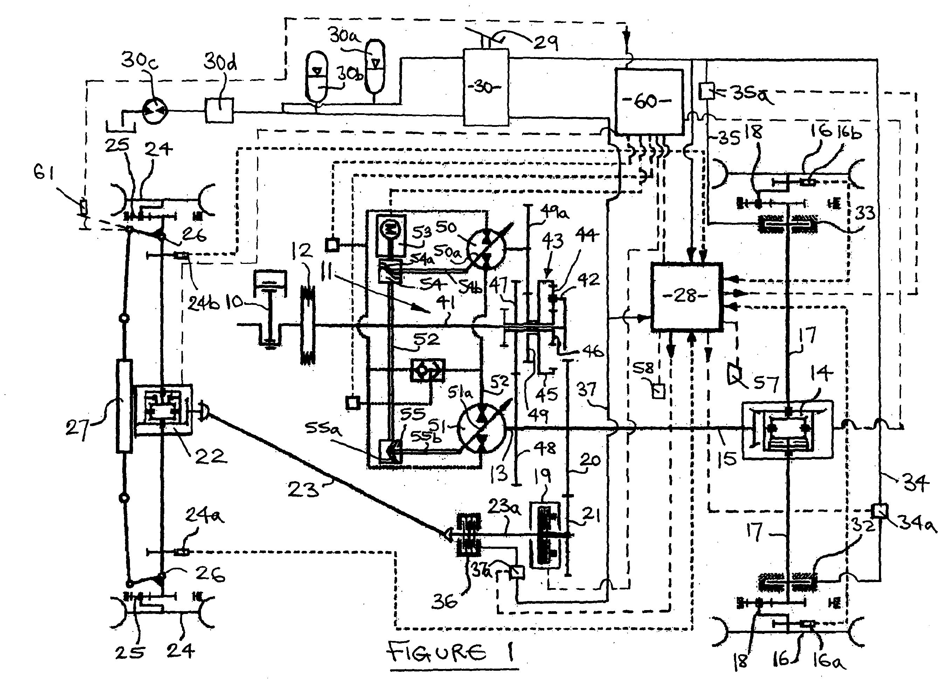

Aspects of the present invention will now be described, by way of example only, with reference to the accompanying Figure 1 which shows diagrammatically the braking, drive and control systems for a four wheel drive tractor.

Referring to Figure 1, an engine 10 drives a CVT 11 via a flywheel 12. CVT output shaft 13 drives a rear axle differential 14 via a shaft 15 and rear wheels 16 via half shafts 17 and final reduction gears 18. Output shaft 13 also drives front wheel drive clutch 19 via meshing gears 20,21 which in turn drives a front axle differential 22 via shafts 23 and 23a. Differential 22 drives front wheels 24 via final reduction gears 25. Wheels 24 are steerable about substantially vertical axes 26 using a hydraulic steering cylinder 27 mounted on the front axle casing.

The tractor has a braking system actuated by a pedal 29 which operates a brake control valve 30 which is supplied with pressurised hydraulic fluid by accumulators 30a and 30b which are charged by a pump 30c via a shut-off valve 30d which ensures the filling of accumulators 30a and 30b. Left and right rear brakes 32 and 33 are operated via lines 34 and 35 from valve 30 and a front brake 36 provided on shaft 23a is operated via line 37.

The braking system is controlled by an electronic control unit 28 which includes an ABS function to prevent the locking of the wheels under braking. Control unit 28 receives vehicle operating parameter signals such as the brake pressure in lines 34,35 and 37, the wheel speeds from sensors 16a, 16b and 24a, 24b and optionally vehicle speed from a radar unit 57 and vehicle acceleration from a sensor 58. The control unit 28 operates pressure control valves 34a, 35a and 37a in brake lines 34,35 and 37 respectively to prevent the brake pressure rising to levels at which wheel locking will occur in the normal ABS manner.

The CVT 11 has an input shaft 41 driven from engine 10 which drives the planet carrier 42 of epicyclic gear 43. Planet gears 44 of epicyclic 43 drive an annulus gear 45 and a sun gear 46.

Sun gear 46 drives gear 47 which meshes with gear 48 on output shaft 13. Annulus gear 45 drives gear 49 which in turn drive a variable displacement hydraulic pump 50 via gear 49a. Pump 50 drives variable displacement hydraulic motor 51 via piping 52. Motor 51 in turn also drives CVT output shaft 13.

CVT 11 is thus of the hydro-mechanical power-split type and operates briefly as follows. Pump 50 and motor 51 are both of the variable angle swash-plate type in which the angle of the swash-plates shown diagrammatically at 50a and 51a determines the delivery/intake volume of the pump/motor. The angle of the swash-plates 50a and 51a is controlled by shaft 52 which is rotated by an actuating motor 53. Shaft 52 carries cam cylinders 54 and 55 which have peripheral cam tracks 54a and 55a in which followers on the ends of actuating rods 54b and 55b engage. Rods 54b and 55b respectively operate swash-plates 50a and 51a respectively (via valves and actuating pistons not shown in Figure 1) to vary the power transmitted from pump 50 to motor 51.

A tractor control system 60 is provided which controls the operative ratio of the CVT either automatically in response to the load or other factors imposed on the tractor and/or in response to operating conditions set by the tractor driver.

This control system 60 is connected with brake control unit 28 and also controls the operation of the front and rear differentials 22 and 14 as well as other tractor functions not described herein and receives front wheel turn angle signals from sensor 61.

The brake control unit 28 continuously monitors the speed of rotation of the wheels 16 and 24 of the vehicle to detect when a particular wheel is about to lock. This is done by comparing the current speed of rotation of each wheel from the sensors 16a and 24a with the current speed of the vehicle which can be taken from an acceleration sensor (more common when an ABS function is fitted), radar unit 57 (if fitted) or can be calculated from engine speed and gear ratio.

Thus if the vehicle decelerates, either due to the driver releasing the engine throttle pedal, a hand control lever being moved to decelerate the vehicle, the gear ratio being changed by the driver or the driver applying the brakes, the control system 60 adjusts the operative ratio of the CVT to provide engine braking. The brake control unit 28 monitors wheel speed and brake pressure to provide the ABS function. If control unit 28 detects any tendency for the wheels 16 and 24 to lock this brake pressure is reduced accordingly by operating pressure control valves 34a, 35a and 37a and the locking condition is communicated to the control system 60 which then raises the currently operative CVT ratio to allow the wheels which were locking to speed up to a wheel speed appropriate for the current speed of the vehicle.

In the example described, there is one pump 50 which drives a single motor 51 which drives both front and rear wheels 24 and 16. The present invention is applicable to CVTs in which a single pump drives two motors one of which drives the front wheels and the other of which drives the rear wheels. This enables the ratio applied to each wheel axle to be controlled separately

## Claims

1. A vehicle having an engine (10) which drives wheels (16,24) of the vehicle via a CVT (11), a driver operated braking system which brakes wheels of the vehicle, and an electronic control system (28) which, in the event of deceleration of the vehicle, detects when the driven wheels are about to lock and increases the currently operative CVT ratio to allow the locking wheels to speed up towards a rotational speed corresponding with the current vehicle speed whilst ensuring that any braking operation selected by the driver is maintained subject to the avoidance of wheel locking, **characterised in that** the CVT (11) is of the hydrostatic/mechanical power split type, and the hydrostatic portion on the CVT has a single hydraulic pump (50) which drives two hydraulic motors (51) one motor driving front wheels (24) of the vehicle and the other motor driving rear wheels (16) of the vehicle so that wheel locking of the front and rear wheels can be controlled separately.

2. A vehicle according to claim 1 in which the electronic control system (28) measures the vehicle speed and the speed of rotation of the driven wheels of the vehicle and then calculate if the speed of rotation of the wheels is lower than that required to give the vehicle speed, thus indicating an imminent locking of the wheels.

3. A vehicle according to claim 2 in which the braking system includes an anti-lock braking system (ABS) function which can provide the wheel speed and vehicle speed values and prevent wheel locking under braking.

## Patentansprüche

1. Fahrzeug, mit einem Motor (10), der Räder (16, 24) des Fahrzeugs über ein CVT (11) antreibt, einem fahrerbedienten Bremssystem, das die Räder des Fahrzeugs bremst, und einem elektronischen Steuer-/Regelsystem (28), das im Fall einer Verzögerung des Fahrzeugs feststellt, wenn die angetriebenen Räder vor dem Blockieren stehen und das gegenwärtig geltende CVT - Übersetzungsverhältnis erhöht, um es den blockierenden Rädern zu ermöglichen, in Richtung einer Drehgeschwindigkeit zu beschleunigen, die der gegenwärtigen Fahrzeuggeschwindigkeit entspricht, während sichergestellt ist, dass jede durch den Fahrer gewählte Bremsaktion bei Vermeidung des Blockierens der Räder aufrechterhalten wird, **dadurch gekennzeichnet, dass** das CVT (11) dem hydrostatischen/mechanischen Leistungsverzweigungstyp angehört und der hydrostatische Teil an dem CVP eine einzelne Hydraulikpumpe (50) aufweist, die zwei Hydraulikmotoren (51) antreibt, von denen ein Motor die Vorderräder (24) des Fahrzeugs und der andere Motor die Hinterräder (16) des Fahrzeugs antreibt, so dass das Blockieren der Vorderräder und der Hinterräder separat gesteuert/geregelt werden kann.

2. Fahrzeug nach Anspruch 1, wobei das elektronische Steuer-/Regelsystem (28) die Fahrzeuggeschwindigkeit und die Drehgeschwindigkeit der angetriebenen Räder des Fahrzeugs misst und dann berechnet, ob die Drehgeschwindigkeit der Räder niedriger als die für die Fahrzeuggeschwindigkeit erforderliche Drehgeschwindigkeit ist und so ein bevorstehendes Blockieren der Räder anzeigt.

3. Fahrzeug nach Anspruch 2, wobei das Bremssystem eine Antiblockiersystemfunktion (ABS) aufweist, welche die Werte der Radgeschwindigkeit und der Fahrzeuggeschwindigkeit bereitstellen und ein Blockieren des Rads beim Bremsen verhindern kann.

## Revendications

1. Véhicule comportant un moteur (10) qui entraîne des roues (16, 24) du véhicule par l'intermédiaire d'une transmission CVT (11), un dispositif de freinage activé par le conducteur qui freine des roues du véhicule, et un dispositif de commande électronique (28) qui, en cas de décélération du véhicule, détecte l'instant auquel les roues motrices sont sur le point de se bloquer et augmente le rapport de transmission CVT efficace courant afin de permettre l'accélération des roues bloquées jusqu'à une vitesse de rotation correspondant à la vitesse courante de véhicule tout en s'assurant qu'une opération de freinage sélectionnée par le conducteur est maintenue soumise à la condition d'évitement de blocage de roue, **caractérisé en ce que** la transmission CVT (11) est du type à séparation de puissance hydrostatique/mécanique, et la partie hydrostatique de la transmission CVT comporte une simple pompe hydraulique (50) qui entraîne deux moteurs hydrauliques (51) un premier moteur entraînant les roues avant (24) du véhicule et l'autre moteur entraînant les roues arrière (16) du véhicule de telle sorte que le blocage des roues avant et arrière peut être commandé séparément.

2. Véhicule selon la revendication 1 dans lequel le dispositif de commande électronique (28) mesure la vitesse de véhicule et la vitesse de rotation des roues entraînées du véhicule et calcule ensuite si la vitesse de rotation des roues est inférieure à celle requise afin d'obtenir la vitesse de véhicule, indiquant ainsi un blocage imminent des roues.

3. Véhicule selon la revendication 2 dans lequel le circuit de freinage comporte une fonction de dispositif de freinage anti-blocage (ABS) qui peut fournir les valeurs de vitesse de roue et de vitesse de véhicule et empêcher le blocage de roue au cours du freinage.
